# EUROPÄISCHE PATENTSCHRIFT

(11) **EP 3 210 766 B1**
(45) Veröffentlichungstag und Bekanntmachung des Hinweises auf die Patenterteilung: **17.02.2021**
(21) Anmeldenummer: 17157878.4
(22) Anmeldetag: 24.02.2017
(51) Int. Cl.: B29C 70/38, B29C 70/54

(54) **FASERLEGEKOPF ZUM LEGEN VON FASERHALBZEUGPROFILEN, FASERLEGEANLAGE SOWIE VERFAHREN HIERZU**
FIBRE LAYING HEAD FOR THE LAYING OF SEMI-FINISHED FIBRE PROFILES, FIBRE LAYING SYSTEM AND METHOD FOR SAME
TÊTE DESTINÉE À POSER DES PROFILÉS DE DEMI-PRODUIT EN FIBRE, INSTALLATION DE POSE DE FIBRE ET PROCÉDÉ ASSOCIÉ

(30) Priorität: 26.02.2016 DE 102016103484
(43) Veröffentlichungstag der Anmeldung: 30.08.2017
(73) Patentinhaber: Deutsches Zentrum für Luft- und Raumfahrt e.V., 51147 Köln (DE)
(72) Erfinder: NIEMANN, Steffen, 38440 Wolfsburg (DE); SINAPIUS, Prof. Dr. Michael, 37085 Göttingen (DE); TRANSIER, Gordon, 85375 Neufahm (DE); PÖPPELMANN, Michael, 59320 Ennigerloh (DE)
(74) Vertreter: Gramm, Lins & Partner Patent- und Rechtsanwälte PartGmbB

(56) Entgegenhaltungen:
- EP-A1- 0 846 551
- US-A- 4 601 775
- US-A- 5 182 060
- US-A1- 2013 221 568

## Beschreibung

Die Erfindung betrifft einen Faserlegekopf zum Legen von dreidimensionalen Faserhalbzeugprofilen für die Herstellung eines Faserverbundbauteils. Die Erfindung betrifft ebenso eine Faserlegeanlage mit einem Werkzeug und einem derartigen Faserlegekopf. Die Erfindung betrifft außerdem ein Verfahren zum Legen von dreidimensionalen Faserhalbzeugprofilen für die Herstellung eines Faserverbundbauteils.

Faserverbundbauteile sind heute aus der Luft- und Raumfahrt nicht mehr wegzudenken. Insbesondere aufgrund ihrer hohen spezifischen Festigkeit und Steifigkeit eignen sich Faserverbundbauteile besonders dafür, um das Potential des Leichtbaus auszunutzen. Faserverbundbauteile werden dabei aus einem Faserverbundwerkstoff hergestellt, der zumindest ein Fasermaterial einerseits und ein das Fasermaterial einbettendes Matrixmaterial aufweist. Faserverbundwerkstoffe können dabei hinsichtlich ihrer Komponenten sowohl getrennt als auch zusammen bereitgestellt werden, indem bspw. trockene Fasermaterialien oder bereits vorimprägnierte Fasermaterialien (Prepregs) verwendet werden.

Faserverbundwerkstoffe und die daraus hergestellten Faserverbundbauteile weisen gegenüber klassischen Werkstoffen eine anisotrope Materialeigenschaft auf, d.h. der Grad der Festigkeit und Steifigkeit ist richtungsabhängig. In Faserrichtung weisen die Faserverbundbauteile dabei eine besonders hohe Festigkeit und Steifigkeit auf, während außerhalb der Faserebene die Festigkeit und Steifigkeit abnimmt.

Daher ist es gerade für großflächige Faserverbundbauteile, wie bspw. Flügelschalen oder Rumpfschalen von Flugzeugen, oftmals notwendig, die Flächenstabilität der Faserverbundbauteile mit Hilfe von speziellen Profilbauteilen zu verstärken, um so auch eine notwendige Stabilität des Bauteils innerhalb der Bauteilebene, und nicht nur in Faserrichtung, zu bewirken. Bei Flügelschalen oder Rumpfschalen werden derartige verstärkende Profilbauteile Stringer, Rippen und Spanten genannt.

Bei einer Flügelschale bzw. Rumpfschale aus einem Faserverbundwerkstoff werden dabei diese verstärkenden Profilbauteile direkt auf die Innenseite der Flügelschale bzw. Rumpfschale aufgeklebt, wobei die Verstärkungselemente dabei ebenfalls aus einem Faserverbundwerkstoff gebildet werden. Hierbei kommen oftmals U-förmige oder V-förmige Profilformen zum Einsatz, die aufgeklebt auf das Bauteil die notwendige Flächenstabilität gewährleisten sollen.

Um bei der Herstellung eines Faserverbundbauteils die Kosten zu senken und die Effizienz zu erhöhen, werden insbesondere großflächige Faserverbundbauteile automatisiert hergestellt, wobei insbesondere die Faserablage automatisiert durchgeführt werden soll. Insbesondere aus der WO 2005/105641 A2 sowie aus der DE 10 2010 015 027 B4 sind automatisierte Faserlegeanlagen bekannt, bei denen mit Hilfe eines Roboters und einem an dem Roboter angeordneten Faserlegekopf als Endeffektor Fasermaterial auf einer Werkzeugform abgelegt werden kann.

Der entscheidende Nachteil hierbei ist, dass die profilförmigen Versteifungselemente nicht automatisiert abgelegt werden können, da die bekannten Anlagen entweder nur einzelne Rovings ablegen können oder insgesamt nur flächiges, nicht dreidimensional geformtes Fasermaterial legen können. Daher werden in der Praxis die Versteifungselemente in der Regel durch geschultes Fachpersonal händisch auf die flächigen Bauteile gelegt bzw. geklebt.

US 2013/0221568 A1 offenbart eine Vorrichtung, bei der ein Faserhalbzeug auf eine formgebende Profilform abgelegt werden soll. Hierbei kann das Faserhalbzeug vor dem Ablegen umgeformt werden, wodurch sich eine leicht U-förmige Profilform vor dem Ablegen bilden lässt.

Es ist daher Aufgabe der vorliegenden Erfindung eine Vorrichtung und ein Verfahren anzugeben, mit dem eine hochintegrale automatisierte Faserablage möglich wird und der Bestandteil von manuellen bzw. händischen Fertigungsschritten reduziert wird.

Die Aufgabe wird mit dem Faserlegekopf gemäß Anspruch 1, der Faserlegeanlage gemäß Anspruch 10 sowie dem Verfahren gemäß Anspruch 13 erfindungsgemäß gelöst.

Gemäß Anspruch 1 wird ein Faserlegekopf zum Legen von dreidimensionalen Faserhalbzeugprofilen für die Herstellung eines Faserverbundbauteils vorgeschlagen, wobei das Faserhalbzeugprofil aus einem Fasermaterial als Teil eines Faserverbundwerkstoffes mit Hilfe des Faserlegekopfes gebildet wird. Ein Faserverbundwerkstoff ist dabei ein Werkstoff, aus dem sich ein Faserverbundbauteil herstellen lässt und der in der Regel zwei wesentliche Elemente enthält, nämlich zum einen das Fasermaterial und zum anderen das Matrixmaterial (bspw. ein Kunststoff oder ein Harz). Das Faserhalbzeugprofil wird dabei aus zumindest einem Fasermaterial als Teil eines Faserverbundwerkstoffes gebildet, sodass das Faserhalbzeugprofil sowohl aus trockenen Fasermaterialien als auch vorimprägnierten Fasermaterialien (sogenannte Prepregs) gebildet werden kann.

Unter einem dreidimensionalen Faserhalbzeugprofil wird dabei ein Halbzeug verstanden, das als Material ein Fasermaterial eines Faserverbundwerkstoffes aufweist und das eine dreidimensionale Profilform hat, bei der ein Querschnitt senkrecht zur Faserebene sowohl eine Ausdehnung in y-Richtung (Breite) als auch eine Ausdehnung in z-Richtung (Höhe) hat (die Dicke des Fasermaterials bleibt hierbei unberücksichtigt und wird als Null angenommen). Ein dreidimensionales Faserhalbzeugprofil ist somit ein profiliertes Faserhalbzeug, das aus der Ebene der Faserhalbzeugebene heraus verformt und eine Profilform hat. Die x-Richtung ist dabei die Längsrichtung (Förderrichtung), die y-Richtung die Breite und die z-Richtung die Stärke, Dicke bzw. Höhe des Profils. Die flächige Ausdehnung eines Fasermaterials wird dabei durch die x-y-Richtung definiert, was letztlich die Faserebene bildet.

Der Faserlegekopf weist gattungsgemäß eine Kopfbefestigung zum Befestigen des Faserlegekopfes an einem Bewegungsautomaten als Endeffektor auf, um so dem Faserlegekopf als ein Effektor bspw. an Robotern einsetzen zu können. Des Weiteren weist der Faserlegekopf eine Fasermaterialbereitstellungseinrichtung auf, die zum Bereitstellen eines flächigen, nicht dreidimensional umgeformten Fasermaterials ausgebildet ist. Das flächige, nicht dreidimensionale Fasermaterial wird in der Regel auf Spulen oder Walzen aufgerollt und von diesen dann entsprechend bereitgestellt, wobei das flächige, nicht dreidimensional umgeformte Fasermaterial gerade keine Profilform aufweist und in einem Querschnitt senkrecht zur Faserhalbzeugebene keinen Höhenanteil (z-Richtung) hat. In Bezug auf eine Förder- und Ablegerichtung entspricht die Form des Querschnitts, der senkrecht zur Faserebene und senkrecht zur Förderrichtung liegt, im Wesentlichen einer Geraden und weist keine Höhenanteile auf. Das flächige, nicht dreidimensional umgeformte bereitgestellte Fasermaterial ist somit nicht aus der Faserhalbzeugebene heraus umgeformt.

Des Weiteren weist der Faserlegekopf eine Legeeinheit auf, der das durch die Fasermaterialbereitstellungseinrichtung dem Faserlegekopf bereitgestellte Fasermaterial kontinuierlich zugeführt wird und zum Legen des kontinuierlich zugeführten Fasermaterials auf einem Werkzeug zur Herstellung eines Faserverbundbauteils ausgebildet ist. Eine solche Legeeinheit eines gattungsgemäßen Faserlegekopfes bildet somit den letzten Teil der Prozesslegekette und drückt bzw. legt das Fasermaterial auf die Werkzeugoberfläche. In der Regel befindet sich das Fasermaterial dabei zwischen der Legeeinheit des Faserlegekopfes einerseits und der formgebenden Werkzeugoberfläche andererseits. Eine derartige Legeeinheit kann bspw. eine Anpressrolle bzw. Anpresswalze oder ein Gleitschuh oder ähnliches sein.

Erfindungsgemäß ist nun vorgesehen, dass zwischen der Fasermaterialbereitstellungseinrichtung und der Legeeinheit in dem Faserlegekopf eine Umformeinrichtung integriert ist, der das Fasermaterial der Fasermaterialbereitstellungseinrichtung kontinuierlich zugeführt wird und die zum kontinuierlichen Umformen des flächigen, nicht dreidimensional umgeformten Fasermaterials in eine dreidimensionale Profilform zur Bildung eines Faserhalbzeugprofils ausgebildet ist. Die Legeeinheit ist dabei so ausgebildet, dass sie das durch die Umformeinrichtung kontinuierlich gebildete, dreidimensionale Faserprofil auf einer mit der Profilform des Faserhalbzeugprofils korrespondierenden Werkzeugoberfläche ablegt.

Hierdurch wird der aus der Praxis bekannte gattungsgemäße Faserlegekopf, die Fasermaterial auf einer Werkzeugoberfläche ablegen, dahingehend erfindungsgemäß erweitert, dass erst in den Faserlegekopf das flächige Fasermaterial zu einem Faserhalbzeugprofil mit einer vorgegebenen Profilform umgeformt und anschließend abgelegt wird, wobei sowohl das Umformen als auch das Ablegen kontinuierlich erfolgen, wodurch sich ein derartiger Faserlegekopf von diskreten Umformprozessen und anschließendem Ablegen unterscheiden. Die Schritte des Umformens und des Ablegens werden somit in einem Prozessschritt integriert, während bei diskreten Verfahren zunächst das Fasermaterial vollständig umgeformt und in die gewünschte Profilform gebracht wird und anschließend das vollständig umgeformte Profilbauteil abgelegt wird. Im Gegensatz dazu hat das kontinuierliche Umformen und Ablegen innerhalb des Faserlegekopfes den entscheidenden Vorteil, dass direkt im Legeprozess auf das Werkzeug ein entsprechendes Faserhalbzeugprofil abgelegt werden kann, ohne dies zuvor herzustellen und entsprechend zu lagern und vorzuhalten. Vielmehr genügt es, wenn die sowieso für die Ablage vorgesehenen flächigen Fasermaterialien bereitgestellt werden und je nach Anforderung dann das Faserhalbzeugprofil bei Bedarf umgeformt, gebildet und abgelegt wird.

Erfindungsgemäß weist die Umformeinrichtung eine oder mehrere Führungsflächen auf, die bspw. durch Formelemente gebildet werden können, an denen das Fasermaterial zum Umformen entlang geführt wird und das Fasermaterial somit über die Führungsflächen formschlüssig gleitet. Zumindest in einem Endabschnitt weisen die Führungsflächen eine Querschnittsform auf, die mit der Profilform des Faserhalbzeugprofils korrespondieren oder dieser Profilform entsprechen, um das flächige Fasermaterial in die dreidimensionale Profilform umzuformen. Damit kann das flächige Faserhalbzeug in die dreidimensionale Profilform gebracht werden, indem das Fasermaterial die Querschnittsform der Führungsflächen in zumindest dem definierten Endabschnitt der Führungsflächen annimmt und somit die Profilform in dem Faserhalbzeug erzeugt wird.

Dabei ist es vorteilhaft, wenn die Umformeinrichtung so ausgebildet ist, dass sie in den Zuführabschnitt zwischen Fasermaterialbereitstellungseinrichtung und Legeeinheit bedarfsweise integriert werden kann, sodass mit Hilfe des Faserlegekopfes sowohl die Ablage von flächigen, nicht dreidimensionalen umgeformten Fasermaterialien einerseits als auch die Ablage von umgeformten Faserhalbzeugprofilen andererseits möglich ist. Im ersteren Fall wird die Umformeinrichtung aus dem besagten Zuführabschnitt entfernt, sodass das Fasermaterial nicht durch die Umformeinrichtung umgeformt wird. Im zweiteren Fall wird die Umformeinrichtung in den Zuführabschnitt integriert und das Fasermaterial wird sodann während des Transportes von der Fasermaterialbereitstellungseinrichtung zur Legeeinheit umgeformt und in die entsprechende Profilform gebracht.

Die Erfinder haben dabei erkannt, dass eine derartige Umformeinrichtung in einen Faserlegekopf integriert und das Fasermaterial während der Faserablage kontinuierlich umgeformt werden kann, um so entsprechende Faserhalbzeugprofile "on demand" herstellen zu können. Dabei hat sich gezeigt, dass trotz des höheren eingebrachten Gewichtes aufgrund der integrierten Umformeinrichtung dennoch eine präzise Faserablage möglich ist.

Gemäß einer vorteilhaften Ausführungsform hat die Fasermaterialbereitstellungseinrichtung mindestens einen in dem Faserlegekopf integrierten Fasermaterialspeicher, der das umzuformende und zu legende, flächige Fasermaterial bereitstellt. Der Fasermaterialspeicher kann bspw. in Form einer Rolle oder Walze ausgebildet sein, auf dem das Fasermaterial, bspw. in Form eines Endlosfasermaterials, aufgewickelt ist. Erfindungsgemäß ist dabei auch denkbar, dass die Fasermaterialbereitstellungseinrichtung eine Zuführeinrichtung hat, mit der das Fasermaterial von einem außerhalb des Faserlegekopfes befindlichen Fasermaterialspeicher dem Faserlegekopf zugeführt wird. Hierdurch kann auf einen Fasermaterialspeicher innerhalb des Faserlegekopfes verzichtet werden, wodurch Gewicht am Faserlegekopf eingespart werden kann. Die Zuführeinrichtung weist hierfür eine Öffnung in dem Faserlegekopf auf, um das Fasermaterial in den Faserlegekopf zu führen und dann der Umformeinrichtung zuzuführen, um das Fasermaterial entsprechend in die Profilform umzuformen.

Gemäß einer weiteren vorteilhaften Ausführungsform ist die Umformeinrichtung zum kontinuierlichen Umformen des flächigen, nicht dreidimensional umgeformten Fasermaterials in eine U-förmige, V-förmige, T-förmige und/oder Omega-förmige Profilform des Faserhalbzeugprofils ausgebildet. Hierdurch lassen sich kontinuierlich während der Faserablage bspw. Versteifungselemente in Form von Stringern herstellen und ablegen und somit direkt in den Legeprozess integrieren.

In einer vorteilhaften Ausführungsform weist die Umformeinrichtung eine oder mehrere Umformrollen auf, die eine Rollenoberfläche haben, an der das Fasermaterial zum Umformen in die Profilform zumindest teilweise anliegt. Die Rollenoberfläche der Umformrollen ist dabei so ausgebildet, dass das Fasermaterial an der Rollenoberfläche zumindest über einen gewissen Winkel hinweg formschlüssig anliegt, sodass das Fasermaterial die Form der Rollenoberfläche in dem Abschnitt, in dem das Fasermaterial mit der Rollenoberfläche der Umformrollen kontaktiert, annimmt. Die Umformrollen weisen dabei in einem axialen Querschnitt eine Form auf, die mit der Profilform des Faserhalbzeugprofils korrespondiert oder dieser Profilform entspricht, sodass das Fasermaterial mit Hilfe der Umformrollen in die dreidimensionale Profilform umgeformt werden kann.

Unter einem axialen Querschnitt wird dabei ein Querschnitt in axialer Richtung verstanden, wobei die Querschnittsebene vorzugsweise durch die Achse der Umformrollen geht. Dadurch wird ein axiales Rollenoberflächenprofil sichtbar, das zu der Profilform des herzustellenden Faserhalbzeugprofils korrespondiert oder dieser entspricht. Dabei kann die Umformrolle bspw. als rotationssymmetrischer Körper aufgefasst werden, der einen in axialer Richtung gleichbleibenden oder in axialer Richtung veränderlichen Radius bzw. Durchmesser aufweist.

Denkbar ist dabei sicherlich auch, dass mehrere Umformrollen axial verteilt angeordnet und zum Teil koaxial bzw. mit unterschiedlichen Radien versehen sind, wodurch die herzustellende Profilform durch die Anordnung verschiedener Umformrollen erfolgt. Denkbar ist aber auch, dass die Umformrolle selber durch über die axiale Richtung verschiedene Radien und damit einhergehende Oberflächenform die Profilform des Faserhalbzeugprofils definiert.

In einer weiteren vorteilhaften Ausführungsform weist die Legeeinheit wenigstens eine Anpressrolle auf, wobei die Anpressrolle in einem axialen Querschnitt mit der Profilform des Faserhalbzeugprofils korrespondiert oder dieser Profilform entspricht. Alternativ oder zusätzlich kann die Anpressrolle auch einen axialen Querschnitt aufweisen, der mit der Profilform des Faserhalbzeugprofils korrespondierenden Werkzeugprofilform korrespondiert oder dieser Werkzeugprofilform entspricht, sodass das Fasermaterial mit Hilfe der Anpressrolle, dessen Querschnittsform mit der Werkzeugprofilform korrespondiert oder dieser entspricht, so zusammenwirkt, dass das Fasermaterial die Profilform des Werkzeuges annimmt und somit die Profilform des Faserhalbzeugprofils gebildet wird.

In diesem Zusammenhang ist es bspw. besonders vorteilhaft, wenn die wenigstens eine Anpressrolle der Legeeinheit einen Teil der Umformeinrichtung bildet, sodass auch die Anpressrolle zum Umformen des flächigen oder bereits teilweise umgeformten Fasermaterials in die dreidimensionale Profilform zur Bildung des Faserhalbzeugprofils ausgebildet ist. Auch hierfür kann die Anpressrolle in einem axialen Querschnitt mit der Profilform des Faserhalbzeugprofils korrespondieren oder dieser Profilform entsprechen.

Diesbezüglich ist es besonders vorteilhaft, wenn die Legeeinheit eine Mehrzahl von Anpressrollen aufweist, wobei die Anpressrollen so ausgebildet angeordnet sind, dass jede Anpressrolle zumindest einen Profilabschnitt kontaktiert und jede Anpressrolle einen axialen Querschnitt aufweist, der mit der Profilform des entsprechenden Profilabschnitts korrespondiert oder dieser Profilform des Profilformabschnittes entspricht. Somit wird es möglich, für mehrere Profilformabschnitte jeweils separate Anpressrollen vorzusehen, die das Fasermaterial in diesem Profilformabschnitt auf die Werkzeugoberfläche legen und anpressen, wobei die Form des jeweiligen Profilformabschnitts durch die entsprechende Anpressrolle dieses Profilformabschnittes gebildet wird.

Vorteilhafterweise weist der Faserlegekopf auch eine Schneideinrichtung auf, um das Fasermaterial während des kontinuierlichen Umformens und Legens zu durchtrennen und somit entsprechende vorgegebene Profillängen herzustellen.

In einer weiteren vorteilhaften Ausführungsform weist der Faserlegekopf mindestens zwei Rollen auf, die ein gegensinnig rotierendes Rollenpaar bilden, so dass hierdurch eine Vorschubeinrichtung gebildet wird, durch die das Fasermaterial entsprechend zu der Umformeinrichtung und der Legeeinheit vorgeschoben, d.h. zugeführt werden kann. Hierfür durchläuft das Fasermaterial form- und kraftschlüssig zwischen den beiden gegensinnig rotierenden Rollen des Rollenpaares hindurch und wird dabei in Vorschubrichtung transportiert.

Die Aufgabe der vorliegenden Erfindung wird im Übrigen auch erfindungsgemäß mit der Faserlegeanlage gemäß Anspruch 10 gelöst, wobei die Faserlegeanlage wenigstens einen Faserlegekopf wie zuvor beschrieben aufweist und ein Werkzeug aufweist, dessen Werkzeugoberfläche mit der Profilform des dreidimensionalen Faserhalbzeugprofils korrespondiert oder dieser Profilform entspricht. Der Faserlegekopf kann dann das dreidimensional umgeformte Faserhalbzeugprofil auf die mit dieser Profilform des Faserhalbzeugprofils korrespondierende Werkzeugoberfläche ablegen.

Vorteilhafterweise weist die Werkzeugoberfläche des Werkzeuges eine oder mehrere reliefartige Vertiefungen und/oder Erhebungen auf, die eine Querschnittsform haben, die mit der Profilform des Faserhalbzeugprofils korrespondieren oder dieser Profilform entsprechen, so dass mithilfe der Faserlegeanlage dann die Faserhalbzeugprofile in die Vertiefungen eingelegt oder auf die Erhebungen der Werkzeugoberfläche aufgelegt werden können, so dass die Faserhalbzeugprofile in den Vertiefungen und/oder auf den Erhebungen formschlüssig anliegen.

Vorteilhafterweise weist die Faserlegeanlage mindestens einen Bewegungsautomaten auf, an dem als Endeffektor der Faserlegekopf angeordnet ist, so dass der Bewegungsautomat den Faserlegekopf gegenüber dem feststehenden Werkzeug frei im Raum bewegen kann. Ein solcher Bewegungsautomat kann beispielsweise eine Portalanlage, ein Linearaktuator oder ein Knickarmroboter bzw. Industrieroboter sein.

Im Übrigen wird die Aufgabe auch mit dem Verfahren gemäß Anspruch 13 erfindungsgemäß gelöst, wobei das Verfahren die Schritte aufweist:
- Bereitstellen eines Faserlegekopfes wie vorstehend beschrieben,
- kontinuierliches Zuführen des durch die Fasermaterialbereitstellungseinrichtung bereitgestellten flächigen, nicht dreidimensional umgeformten Fasermaterials zu der Umformeinrichtung des Faserlegekopfes,
- kontinuierliches Umformen des flächigen, nicht dreidimensional umgeformten Fasermaterials in eine dreidimensionale Profilform zur Bildung des Faserhalbzeugprofils mittels der Umformeinrichtung in dem Faserlegekopf, und
- kontinuierliches Legen des durch den Faserlegekopf gebildeten Faserhalbzeugprofils auf einer Werkzeugoberfläche eines Werkzeuges.

Die Erfindung wird anhand der beigefügten Figuren beispielhaft erläutert. Es zeigen:
- Figur 1: - Schematische Darstellung des erfindungsgemäßen Faserlegekopfes;
- Figur 2: - Ausführungsbeispiel einer alternativen Umformeinrichtung;
- Figur 3: - Schematische Darstellung eines Ausführungsbeispiels mit einer Ablegerolle;
- Figur 4: - Alternatives Ausführungsbeispiel für eine Ablegerolle.

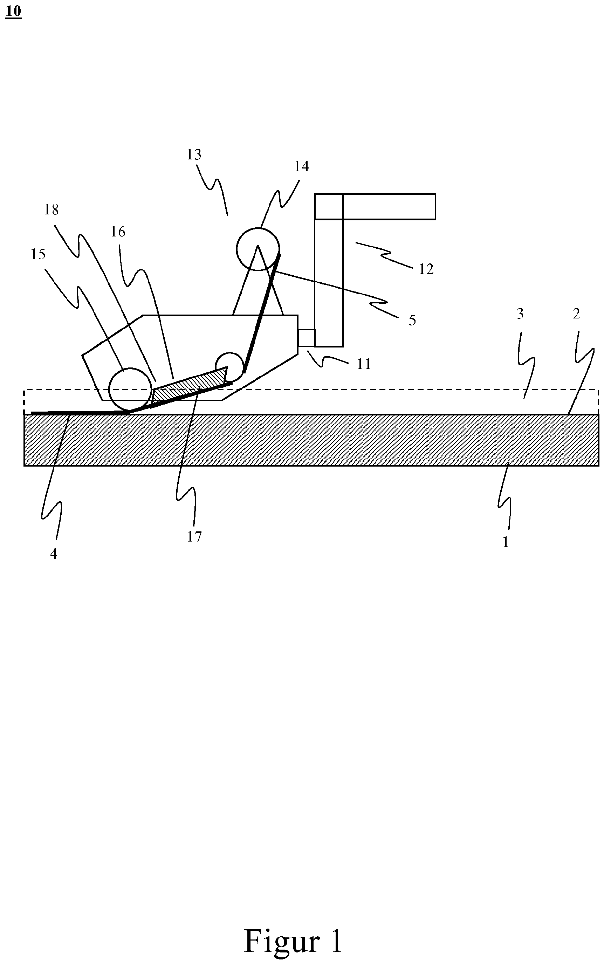

Figur 1 zeigt schematisch den erfindungsgemäßen Faserlegekopf 10 zum Legen von dreidimensionalen Faserhalbzeugprofilen auf ein Werkzeug 1, das eine entsprechende Werkzeugoberfläche 2 hat. Die Werkzeugoberfläche weist im Ausführungsbeispiel der Figur 1 eine Vertiefung 3 auf, in die ein Faserhalbzeugprofil 4, dessen Profilform mit der Querschnittsform der Vertiefung 3 des Werkzeuges 1 korrespondiert, eingelegt werden soll.

Der Faserlegekopf 10 weist zunächst eine Kopfbefestigung 11 auf, mit der der Faserlegekopf 10 an eine übergeordnete Bewegungsvorrichtung bzw. einen Bewegungsautomaten 12 (in Figur 1 lediglich angedeutet) angeordnet werden kann. Die Kopfbefestigung 11 ist dabei insbesondere lösbarer Natur, so dass die Art des Endeffektors des Bewegungsautomaten 12 je nach Anwendungszweck gewechselt werden kann.

Der Faserlegekopf 10 weist im Ausführungsbeispiel der Figur 1 des Weiteren eine Fasermaterialbereitstellungseinrichtung 13 auf, die zum Bereitstellen eines flächigen, nicht dreidimensional umgeformten Fasermaterials 5 ausgebildet ist. Hierfür ist das flächige, nicht dreidimensional umgeformte Fasermaterial 5 auf einer Rolle, Spule oder Walze 14 aufgerollt und kann so kontinuierlich den Umform- und Legeprozess des Faserlegekopfes 10 zugeführt werden.

Das flächige, nicht dreidimensional umgeformte Fasermaterial 5 weist dabei eine Querschnittsform auf, die insbesondere nicht der Querschnittsform der Vertiefung 3 entspricht, so dass ein derartiges flächiges, nicht dreidimensional umgeformtes Fasermaterial 5 auch nicht ohne Weiteres in die entsprechende Vertiefung 3 des Werkzeuges 1 ablegbar ist.

Der Faserlegekopf 10 weist des Weiteren eine Legeeinheit 15 auf, der im Ausführungsbeispiel der Figur 10 in Form einer Ablegerolle oder Ablegewalze ausgebildet ist. Die Ablegerolle bzw. Ablegewalze kann dabei, muss aber nicht, zumindest teilweise der herzustellenden Profilform des Faserhalbzeugprofils 4 entsprechen, wie später noch detailliert dargestellt wird. In der einfachsten Ausführungsform handelt es sich bei der Legeeinheit 15 um eine Andrückrolle mit gleichbleibendem Querschnitt.

Erfindungsgemäß weist der Faserlegekopf 10 eine Umformeinrichtung 16 auf, die in den Faserlegekopf 10 integriert ist, insbesondere in den Führungsabschnitt des Fasermaterials zwischen der Fasermaterialbereitstellungseinrichtung 13 und der Legeeinheit 15. Hierdurch wird sichergestellt, dass das flächige, nicht dreidimensional umgeformte Fasermaterial 5 mithilfe der Umformeinrichtung 16 in seine profilierte Form gebracht wird und nur das Faserhalbzeugprofil durch die Legeeinheit 15 abgelegt werden kann.

Demnach ist die Umformeinrichtung 16 derart ausgebildet, dass sie das flächige, nicht dreidimensionale umgeformte Fasermaterial 5 dreidimensional umformt und so dem Fasermaterial eine Profilform verleiht, die insbesondere der Querschnittsform der Vertiefung 3 des Werkzeuges 1 entspricht.

Hierzu weist die Umformeinrichtung im Ausführungsbeispiel der Figur 1 Führungselemente 17 auf, die unter einem Winkel kleiner als 180° zueinander angeordnet sind und somit die flächige Ebene verlassen und eine Art V-Profil bilden. Das Fasermaterial 5, das flächig von der Fasermaterialbereitstellungseinrichtung 13 der Umformeinrichtung 16 zugeführt wird, wird auf bzw. in diese Führungselemente eingelegt und angedrückt, so dass das Fasermaterial zumindest in einem Endabschnitt 18 der Führungselemente 17 formschlüssig annimmt. In diesem Endabschnitt 18 weisen die Führungselemente dabei eine Querschnittsform auf, die mit der herzustellenden Profilform des Faserhalbzeugprofils 4 korrespondiert oder dieser zunächst in Teilen entspricht, so dass das Fasermaterial 5 zumindest im Endabschnitt formschlüssig anliegt und die entsprechende Querschnittsform als Profilform annimmt.

Anschließend wird das umgeformte Fasermaterial dann der Legeeinheit 15 zugeführt, die es dann auf die Werkzeugoberfläche und insbesondere in die Vertiefung 3 des Werkzeuges 1 ablegt.

Der in Figur 1 dargestellte Faserlegekopf 10 sowie das Werkzeug 1 sind dabei in einer seitlichen Schnittdarstellung dargestellt, so dass die Profilform des Faserhalbzeugprofils 4, die Querschnittsform der Werkzeugoberfläche 2 sowie die Querschnittsform der Führungselemente 17 nicht aus der Figur 1 ersichtlich sind, da sie außerhalb der Betrachtungsebene herauskommen.

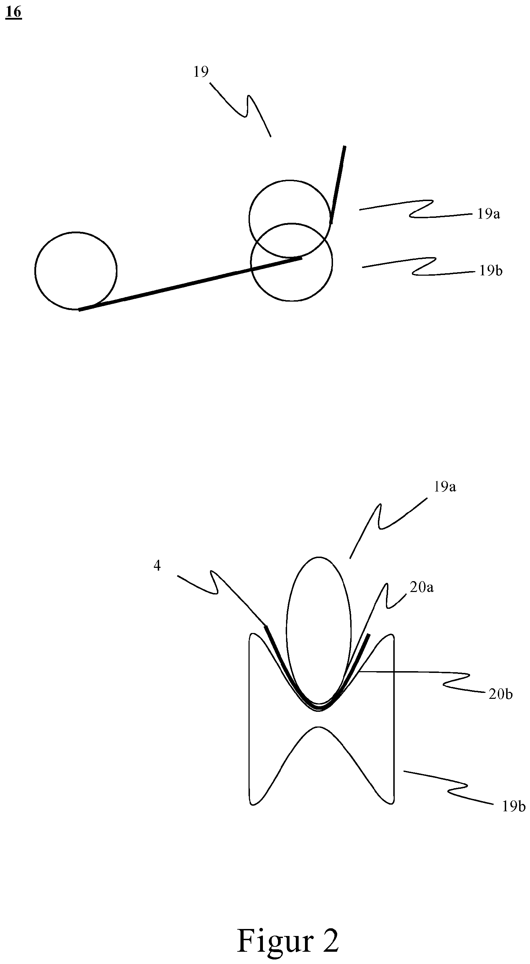

Figur 2 zeigt eine Umformeinrichtung 16, die aus zwei gegensinnig rotierenden Walzen oder Rollen 19a, 19b besteht. Im oberen Teil ist dabei ein seitlicher Querschnitt gezeigt, um die Fasermaterialführung darzustellen, während im unteren Abschnitt ein in axialer Richtung definierter Querschnitt durch die Umformrollen 19a, 19b dargestellt ist, wodurch die Profilform sichtbar wird.

Die untere Umformrolle 19b weist dabei eine Rollenoberfläche 20b auf, die eine V-förmige bzw. U-förmige Profilform hat. Die gesamte Umformrolle 19b kann dabei als Rotationskörper betrachtet werden, der einen veränderlichen Durchmesser hat, wobei die Gesamtform der Umformrolle 19b hier doppelt T-förmig ist.

Durch diese U-förmige Rollenoberfläche 20b wird nun das Fasermaterial geführt, wobei von oben die Umformrolle 19a eingreift, die eine Rollenoberfläche 20a hat, die mit der Rollenoberfläche 20b korrespondiert. Insbesondere bildet die Rollenoberfläche 20a der oberen Umformrolle 19a das korrespondierende Gegenstück zu der Rollenoberfläche 20b der unteren Umformrolle 19b. Zwischen der Rollenoberfläche 20a der oberen Umformrolle und der Rollenoberfläche 20b der unteren Umformrolle wird das Fasermaterial 5 geführt, das aufgrund der entsprechenden Form der Rollenoberflächen 20a, 20b die U-förmige Profilform annimmt und somit innerhalb des Faserlegekopfes umgeformt wird.

Die in der Figur 2 dargestellte Umformung ist aber nur beispielhaft zu verstehen. Selbstverständlich ist es denkbar, verschiedenste Profilformen des Fasermaterials abzubilden, insbesondere Profilformen mit mehreren Krümmungsradien über die Breite hinweg.

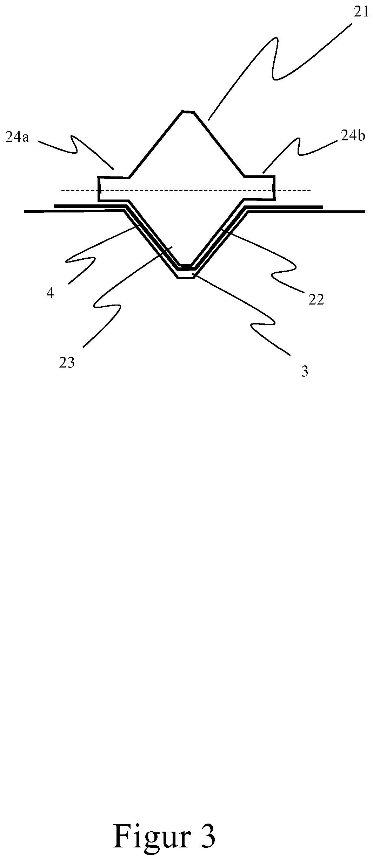

Ein derartiges Beispiel zeigt Figur 3 in einem axialen Querschnitt einer Umformrolle 21, die gleichzeitig auch Bestandteil der Legeeinheit 15 ist. So ist es beispielsweise denkbar, dass die Umformrolle 21 alleiniger Bestandteil der Umformeinrichtung 16 ist, so dass sowohl die Legeeinheit 15 als auch die Umformeinrichtung 16 einzig und allein durch die Umformrolle 21 gebildet wird. Denkbar ist aber auch, dass in Förderrichtung vor der Umformrolle 21 bereits eine Umformung stattgefunden hat, wodurch die Umformrolle 21 bereits umgeformtes Fasermaterial erhält und dieses dann entsprechend in die Vertiefung 3 des Werkzeuges 1 einlegt. Die Umformrolle 21 weist hierbei dann eine Rollenoberfläche 22 auf, die im Wesentlichen der Querschnittsform der Vertiefung 3 des Werkzeuges 1 entspricht und unterstützt somit den Legeprozess.

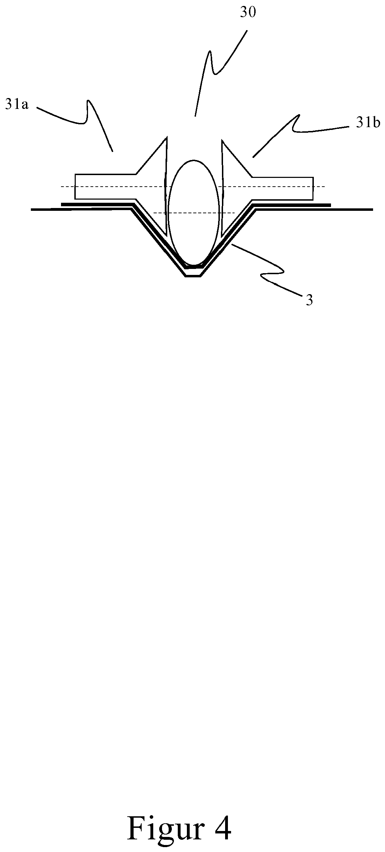

Die Rollenoberfläche 22 der Umformrolle 21 weist im Ausführungsbeispiel der Figur 3 einen U- bzw. V-förmigen mittleren Abschnitt auf, der von jeweils einem linken und einem rechten Randabschnitt 24a, 24b begrenzt wird. Durch den V-förmigen Abschnitt 23 der Rollenoberfläche 22 wird eine V-förmige Profilform im mittleren Bereich des Faserhalbzeugprofils 4 erzeugt, wobei die Seitenränder des Faserhalbzeugprofils 4 abgeknickt werden und mithilfe der Randabschnitte 24a, 24b auf die Werkzeugoberfläche des Werkzeuges 1 gedrückt werden. Im Ergebnis erhält man hierbei eine mehr oder weniger Omega-förmige Profilform. Das in Figur 3 gezeigte Ausführungsbespiel hat den Vorteil, dass mit einer einzigen Umformrolle die entsprechende Profilform herstellbar ist. Nachteil hierbei ist, dass insbesondere die Höhe des Profils nicht variabel einstellbar ist, was in bestimmten Situationen nachteilig sein kann. Eine alternative Ausführungsform zeigt hierbei die Figur 4, die aus insgesamt drei Umformrollen 30, 31a und 31b besteht bzw. aufweist.

Die mittlere Umformrolle 30 bildet dabei den V-förmigen Hauptabschnitt, während die beiden angrenzenden linken und rechten Umformrollen 31a und 31b den jeweiligen Randabschnitt abdecken. Hierdurch wird es möglich, verschiedene Höhen der Vertiefung 3 abzudecken, wodurch diese Rollenanordnung flexibler in der Formgestaltung ist.

So ist es beispielsweise denkbar, dass die Achsen der Rollen 30, 31a und 31b jeweils an einer Bewegungseinrichtung (nicht dargestellt) angeordnet sind, so dass die Rollen in eine radiale Richtung durch verschieben der Achse verstellbar sind. Dabei wird der Abstand der Achse zu der Werkzeugoberfläche verändert, insbesondere bei den seitlichen Rollen 31a und 31b, die den Randabschnitt bilden, wodurch verschiedene Höhen der Vertiefung 3 eingestellt werden können. Denkbar ist auch, dass die Achsen in Richtung des Werkzeuges 1 federnd gelagert sind, wodurch beispielsweise Unebenheiten ausgeglichen werden können.

### Bezugszeichenliste

- 1: - Werkzeug
- 2: - Werkzeugoberfläche
- 3: - Vertiefung
- 4: - Faserhalbzeugprofil
- 5: - flächiges Fasermaterial
- 10: - Faserlegekopf
- 11: - Kopfbefestigung
- 12: - Bewegungsautomaten
- 13: - Fasermaterialbereitstellungseinrichtung
- 14: - Fasermaterialspule
- 15: - Legeeinheit
- 16: - Umformeinrichtung
- 17: - Führungselemente
- 18: - Endabschnitt
- 19: - Rollenanordnung
- 19a: - obere Umformrolle
- 19b: - untere Umformrolle
- 20a: - Rollenoberfläche der oberen Umformrolle
- 20b: - Rollenoberfläche der unteren Umformrolle
- 21: - Umform- und Legerolle
- 22: - Rollenoberfläche der Umform- und Legerolle
- 23: - V-förmiger Rollenabschnitt
- 24a, 24b: - Randabschnitte
- 30: - mittlere Umformrolle
- 31a, 31b: - seitliche Umformrollen

## Patentansprüche

1. Faserlegekopf (10) zum Legen von dreidimensionalen Faserhalbzeugprofilen (4) für die Herstellung eines Faserverbundbauteils, wobei das Faserhalbzeugprofil (4) aus einem Fasermaterial als Teil eines Faserverbundwerkstoffes gebildet ist, mit einer Kopfbefestigung (11) zum Befestigen des Faserlegekopfes (10) an einem Bewegungsautomaten (12) als Endeffektor, mit einer Fasermaterialbereitstellungseinrichtung (13), die zum Bereitstellen eines flächigen, nicht dreidimensional umgeformten Fasermaterials (5) ausgebildet ist, und mit einer Legeeinheit (15), der das durch die Fasermaterialbereitstellungseinrichtung (13) dem Faserlegekopf (10) bereitgestellte Fasermaterial kontinuierlich zugeführt wird und zum Legen des kontinuierlich zugeführten Fasermaterials auf einem Werkzeug (1) zur Herstellung des Faserverbundbauteils ausgebildet ist, wobei zwischen der Fasermaterialbereitstellungseinrichtung (13) und der Legeeinheit (15) in dem Faserlegekopf (10) eine Umformeinrichtung (16) integriert ist, der das Fasermaterial der Fasermaterialbereitstellungseinrichtung (13) kontinuierlich zugeführt wird und die zum kontinuierlichen Umformen des flächigen, nicht dreidimensional umgeformten Fasermaterials (5) in eine dreidimensionale Profilform zur Bildung eines Faserhalbzeugprofils (4) ausgebildet ist, wobei die Legeeinheit (15) zum Legen des durch die Umformeinrichtung (16) kontinuierlich gebildeten, dreidimensionalen Faserhalbzeugprofils (4) auf einer mit der Profilform des Faserhalbzeugprofils (4) korrespondierenden Werkzeugoberfläche (2) ausgebildet ist, wobei die Umformeinrichtung (16) eine oder mehrere Führungsflächen aufweist, an denen das Fasermaterial zum Umformen entlang geführt wird und über die Führungsflächen formschlüssig gleitet, wobei die Führungsflächen zumindest in einem Endabschnitt (18) eine Querschnittsform aufweisen, die mit der Profilform des Faserhalbzeugprofils (4) korrespondieren oder dieser Profilform entsprechen, um das flächige Fasermaterial (5) in die dreidimensionale Profilform umzuformen.

2. Faserlegekopf (10) nach Anspruch 1, **dadurch gekennzeichnet, dass** die Fasermaterialbereitstellungseinrichtung (13) einen in dem Faserlegekopf (10) integrierten Fasermaterialspeicher hat, der das umzuformende und zu legende, flächige Fasermaterial (5) bereitstellt, und/oder dass die Fasermaterialbereitstellungseinrichtung (13) eine Zuführeinrichtung hat, mit der das Fasermaterial von einem außerhalb des Faserlegekopfes (10) befindlichen Fasermaterialspeicher der in dem Faserlegekopf (10) integrierten Umformeinrichtung (16) zuführbar ist.

3. Faserlegekopf (10) nach Anspruch 1 oder 2, **dadurch gekennzeichnet, dass** die Umformeinrichtung (16) zum kontinuierlichen Umformen des flächigen, nicht dreidimensional umgeformten Fasermaterials (5) in eine U-förmige, V-förmige, T-förmige und/oder Omega-förmige Profilform des Faserhalbzeugprofils (4) ausgebildet ist.

4. Faserlegekopf (10) nach einem der vorhergehenden Ansprüche, **dadurch gekennzeichnet, dass** die Umformeinrichtung (16) eine oder mehrere Umformrollen (19a, 19b, 30, 31a, 31b) aufweist, die eine Rollenoberfläche (20a, 20b) haben, an der das Fasermaterial zum Umformen in die Profilform anliegt, wenn es kontinuierlich umgeformt wird, wobei die jeweilige Rollenoberfläche (20a, 20b) der Umformrollen (19a, 19b, 30, 31a, 31b) in einem axialen Querschnitt mit der Profilform des Faserhalbzeugprofils (4) korrespondieren oder dieser Profilform entsprechen, um das flächige Fasermaterial (5) in die dreidimensionale Profilform umzuformen.

5. Faserlegekopf (10) nach einem der vorhergehenden Ansprüche, **dadurch gekennzeichnet, dass** die Legeeinheit (15) wenigstens eine Anpressrolle aufweist, wobei die Anpressrolle in einem axialen Querschnitt mit der Profilform des Faserhalbzeugprofils (4) korrespondiert oder dieser Profilform entspricht und/oder mit der mit der Profilform des Faserhalbzeugprofils (4) korrespondierenden Werkzeugprofilform korrespondiert oder dieser Werkzeugprofilform entspricht.

6. Faserlegekopf (10) nach einem der vorhergehenden Ansprüche, **dadurch gekennzeichnet, dass** die wenigstens eine Anpressrolle der Legeeinheit (15) ein Teil der Umformeinrichtung (16) bildet, wobei die Anpressrolle zum Umformen des flächigen oder bereits teilweise umgeformten Fasermaterials (5) in die dreidimensionale Profilform zur Bildung des Faserhalbzeugprofils (4) ausgebildet ist, indem die wenigstens eine Anpressrolle in einem axialen Querschnitt mit der Profilform des Faserhalbzeugprofils (4) korrespondiert oder dieser Profilform entsprecht, um das flächige Fasermaterial (5) in die dreidimensionale Profilform umzuformen.

7. Faserlegekopf (10) nach einem der Ansprüche 5 oder 6, **dadurch gekennzeichnet, dass** die Legeeinheit (15) eine Mehrzahl von Anpressrollen aufweist, wobei die Anpressrollen so ausgebildet und angeordnet sind, dass jede Anpressrolle zumindest einen Profilabschnitt kontaktiert und einen axialen Querschnitt aufweist, der mit der Profilform des entsprechenden Profilabschnittes korrespondiert oder Profilform des Profilformabschnittes entspricht.

8. Faserlegekopf (10) nach einem der vorhergehenden Ansprüche, **dadurch gekennzeichnet, dass** in dem Faserlegekopf (10) eine Schneideinrichtung vorgesehen ist, die zum Durchtrennen des flächigen, teilweise umgeformten oder vollständig umgeformten Fasermaterials (5) ausgebildet ist.

9. Faserlegekopf (10) nach einem der vorhergehenden Ansprüche, **dadurch gekennzeichnet, dass** in dem Faserlegekopf (10) eine durch mindestens zwei Rollen, die ein gegensinnig rotierendes Rollenpaar bilden, gebildete Vorschubeinrichtung vorgesehen ist, die zum Vorschub des zwischen den beiden Rollen kraftschlüssig geführten Fasermaterials ausgebildet ist.

10. Faserlegeanlage zum Legen von dreidimensionalen Faserhalbzeugprofilen (4) mit einem Faserlegekopf (10) nach einem der vorhergehenden Ansprüche und einem Werkzeug (1), auf dass das dreidimensionale Faserhalbzeugprofil (4) durch den Faserlegekopf (10) abgelegt werden soll, wobei das Werkzeug (1) eine Werkzeugoberfläche (2) hat, die mit der Profilform des dreidimensionalen Faserhalbzeugprofils (4), dass mit dem Faserlegekopf (10) gebildet wird, korrespondiert oder dieser Profilform entspricht.

11. Faserlegeanlage nach Anspruch 10, **dadurch gekennzeichnet, dass** die Werkzeugoberfläche (2) des Werkzeuges (1) eine oder mehrere reliefartige Vertiefungen (3) und/oder Erhebungen aufweist, die eine Querschnittsform haben, die mit der Profilform des Faserhalbzeugprofils (4) korrespondiert oder dieser Profilform entspricht, wobei die Faserlegeanlage zum Legen der Faserhalbzeugprofile (4) in die Vertiefungen (3) und/oder auf die Erhebungen ausgebildet ist, sodass die Faserhalbzeugprofile (4) in den Vertiefungen (3) und/oder auf den Erhebungen der Werkzeugoberfläche (2) formschlüssig anliegen.

12. Faserlegeanlage nach Anspruch 10 oder 11, **dadurch gekennzeichnet, dass** die Faserlegeanlage mindestens einen Bewegungsautomaten (12) hat, an dem als Endeffektor der Faserlegekopf (10) angeordnet ist, wobei der Bewegungsautomat (12) zum Bewegen des Faserlegekopfes (10) gegenüber dem feststehenden Werkzeug (1) ausgebildet ist.

13. Verfahren zum Legen von dreidimensionalen Faserhalbzeugprofilen (4) für die Herstellung eines Faserverbundbauteils, wobei das Faserhalbzeugprofil (4) aus einem Fasermaterial als Teil eines Faserverbundwerkstoffes gebildet ist, mit
- Bereitstellen eines Faserlegekopfes (10) nach einem der Ansprüche 1 bis 9,
- kontinuierliches Zuführen des durch die Fasermaterialbereitstellungseinrichtung (13) bereitgestellten flächigen, nicht dreidimensional umgeformten Fasermaterials (5) zu der Umformeinrichtung (16) des Faserlegekopfes (10),
- kontinuierliches Umformen des flächigen, nicht dreidimensional umgeformten Fasermaterials (5) in eine dreidimensionale Profilform zu Bildung des Faserhalbzeugprofils (4) mittels der Umformeinrichtung (16) in dem Faserlegekopf (10), und
- kontinuierliches Legen des durch den Faserlegekopf (10) gebildeten Faserhalbzeugprofils (4) auf einer Werkzeugoberfläche (2) eines Werkzeuges (1).

## Claims

1. Fibre-laying head (10) for the laying of three-dimensional semi-finished fibre profiles (4) for the production of a fibre composite component, wherein the semi-finished fibre profile (4) is formed from a fibre material as part of a fibre composite material, having a head fastening (11) for fastening the fibre-laying head (10) to an automaton (12) as end effector, having a fibre material provision device (13) which is configured to provide a flat, not three-dimensionally formed fibre material (5), and having a laying unit (15) to which the fibre material provided to the fibre-laying head (10) by the fibre material provision device (13) is continuously fed and which is configured to lay the continuously fed fibre material on a tool (1) for the production of the fibre composite component, wherein integrated in the fibre-laying head (10), between the fibre material provision device (13) and the laying unit (15), is a forming device (16) to which the fibre material of the fibre material provision device (13) is continuously fed and which is configured for the continuous forming of the flat, not three-dimensionally formed fibre material (5) into a three-dimensional profile shape in order to form a semi-finished fibre profile (4), wherein the laying unit (15) is configured to lay the three-dimensional semi-finished fibre profile (4), which is formed in a continuous manner by the forming device (16), on a tool surface (2) which corresponds with the profile shape of the semi-finished fibre profile (4), wherein the forming device (16) comprises one or more guide surfaces, the fibre material being guided along said surfaces for forming purposes and sliding over the guide surfaces in a form-fitting manner, wherein the guide surfaces, at least in an end portion (18), have a cross-sectional shape which corresponds with the profile shape of the semi-finished fibre profile (4) or matches said profile shape in order to form the flat fibre material (5) into the three-dimensional profile shape.

2. Fibre-laying head (10) according to Claim 1, **characterized in that** the fibre material provision device (13) has a fibre material storage means which is integrated in the fibre-laying head (10) and which provides the flat fibre material (5) to be formed and laid, and/or **in that** the fibre material provision device (13) has an infeed device, by means of which the fibre material can be fed from a fibre material storage means located outside of the fibre-laying head (10) to the forming device (16) integrated in the fibre-laying head (10).

3. Fibre-laying head (10) according to Claim 1 or 2, **characterized in that** the forming device (16) is configured for the continuous forming of the flat, not three-dimensionally formed fibre material (5) into a U-shaped, V-shaped, T-shaped and/or omega-shaped profile shape of the semi-finished fibre profile (4).

4. Fibre-laying head (10) according to one of the preceding claims, **characterized in that** the forming device (16) comprises one or more forming rolls (19a, 19b, 30, 31a, 31b), which have a roll surface (20a, 20b) against which the fibre material bears in order to be formed into the profile shape when said material is formed in a continuous manner, wherein the respective roll surface (20a, 20b) of the forming rolls (19a, 19b, 30, 31a, 31b), in axial cross section, corresponds with the profile shape of the semi-finished fibre profile (4) or matches said profile shape in order to form the flat fibre material (5) into the three-dimensional profile shape.

5. Fibre-laying head (10) according to one of the preceding claims, **characterized in that** the laying unit (15) comprises at least one pressing roll, wherein the pressing roll, in axial cross section, corresponds with the profile shape of the semi-finished fibre profile (4) or matches said profile shape and/or corresponds with the tool profile shape which corresponds with the profile shape of the semi-finished fibre profile (4) or matches said tool profile shape.

6. Fibre-laying head (10) according to one of the preceding claims, **characterized in that** the at least one pressing roll of the laying unit (15) forms a part of the forming device (16), wherein the pressing roll is configured to form the flat or already partially formed fibre material (5) into the three-dimensional profile shape in order to form the semi-finished fibre profile (4) **in that** the at least one pressing roll, in an axial cross section, corresponds with the profile shape of the semi-finished fibre profile (4) or matches said profile shape in order to form the flat fibre material (5) into the three-dimensional profile shape.

7. Fibre-laying head (10) according to either of Claims 5 and 6, **characterized in that** the laying unit (15) comprises a plurality of pressing rolls, wherein the pressing rolls are configured and arranged such that each pressing roll contacts at least one profile portion and has an axial cross section which corresponds with the profile shape of the corresponding profile portion or matches profile shape of the profile shape portion.

8. Fibre-laying head (10) according to one of the preceding claims, **characterized in that** a cutting device is provided in the fibre-laying head (10), said cutting device being configured to sever the flat, partially formed or completely formed fibre material (5).

9. Fibre-laying head (10) according to one of the preceding claims, **characterized in that** an advancing device which is formed by at least two rolls, which form an oppositely rotating roll pair, is provided in the fibre-laying head (10), said advancing device being configured to advance the fibre material guided in a force-fitting manner between the two rolls.

10. Fibre-laying system for the laying of three-dimensional semi-finished fibre profiles (4), having a fibre-laying head (10) according to one of the preceding claims and a tool (1) on which the three-dimensional semi-finished fibre profile (4) is intended to be deposited by the fibre-laying head (10), wherein the tool (1) has a tool surface (2) which corresponds with the profile shape of the three-dimensional semi-finished fibre profile (4), which is formed with the fibre-laying head (10), or matches said profile shape.

11. Fibre-laying system according to Claim 10, **characterized in that** the tool surface (2) of the tool (1) comprises one or more relief-like recesses (3) and/or elevations, which have a cross-sectional shape which corresponds with the profile shape of the semi-finished fibre profile (4) or matches said profile shape, wherein the fibre-laying system is configured to lay the semi-finished fibre profiles (4) into the recesses (3) and/or onto the elevations, and therefore the semi-finished fibre profiles (4) bear in the recesses (3) and/or on the elevations of the tool surface (2) in a form-fitting manner.

12. Fibre-laying system according to Claim 10 or 11, **characterized in that** the fibre-laying system has at least one automaton (12) which, as end effector, has the fibre-laying head (10) arranged thereon, wherein the automaton (12) is configured to move the fibre-laying head (10) in relation to the stationary tool (1).

13. Method for the laying of three-dimensional semi-finished fibre profiles (4) for the production of a fibre composite component, wherein the semi-finished fibre profile (4) is formed from a fibre material as part of a fibre composite material, with
- provision of a fibre-laying head (10) according to one of Claims 1 to 9,
- continuous infeed of the flat, not three-dimensionally formed fibre material (5), provided by the fibre material provision device (13), to the forming device (16) of the fibre-laying head (10),
- continuous forming, by means of the forming device (16) in the fibre-laying head (10), of the flat, not three-dimensionally formed fibre material (5) into a three-dimensional profile shape in order to form the semi-finished fibre profile (4), and
- continuous laying of the semi-finished fibre profile (4), formed by the fibre-laying head (10), on a tool surface (2) of a tool (1).

## Revendications

1. Tête de pose de fibres (10) pour la pose de profilés fibreux semi-finis tridimensionnels (4) pour la fabrication d'un composant composite à base de fibres, le profilé fibreux semi-fini (4) étant constitué d'un matériau fibreux en tant que partie d'un matériau composite fibreux, comportant un dispositif de fixation de tête (11) pour la fixation de la tête de pose de fibres (10) à un automate de déplacement (12) en tant qu'effecteur terminal, un dispositif de mise à disposition de matériau fibreux (13) qui est réalisé pour mettre à disposition un matériau fibreux (5) plat, non mis en forme tridimensionnelle, et
une unité de pose (15) à laquelle est amené en continu le matériau fibreux mis à disposition de la tête de pose de fibres (10) par le dispositif de mise à disposition de matériau fibreux (13) et qui est réalisée pour la pose du matériau fibreux amené en continu sur un outil (1) pour la fabrication du composant composite à base de fibres,
dans laquelle
entre le dispositif de mise à disposition de matériau fibreux (13) et l'unité de pose (15), un dispositif de mise en forme (16) est intégré dans la tête de pose de fibres (10), auquel est amené en continu le matériau fibreux du dispositif de mise à disposition de matériau fibreux (13) et qui est réalisé pour la mise en forme en continu du matériau fibreux (5) plat, non mis en forme tridimensionnelle, en une forme profilée tridimensionnelle en vue de constituer un profilé fibreux semi-fini (4),
l'unité de pose (15) est réalisée pour poser le profilé fibreux semi-fini (4) tridimensionnel, réalisé en continu par le dispositif de mise en forme (16), sur une surface d'outil (2) correspondant à la forme profilée du profilé fibreux semi-fini (4),
le dispositif de mise en forme (16) présente une ou plusieurs surfaces de guidage le long desquelles le matériau fibreux destiné à la mise en forme est guidé et glisse sur les surfaces de guidage par coopération de forme,
les surfaces de guidage présentant, au moins dans une partie d'extrémité (18), une forme de section transversale qui correspond ou est conforme à la forme profilée du matériau fibreux semi-fini (4) afin de mettre en forme le matériau fibreux plat (5) en la forme profilée tridimensionnelle.

2. Tête de pose de fibres (10) selon la revendication 1,
**caractérisée en ce que**
le dispositif de mise à disposition de matériau fibreux (13) présente un dispositif de stockage de matériau fibreux qui est intégré dans la tête de pose de fibres (10) et qui met à disposition le matériau fibreux plat (5) à mettre en forme et à poser, et/ou **en ce que**
le dispositif de mise à disposition de matériau fibreux (13) présente un dispositif d'amenée par lequel le matériau fibreux peut être amené depuis un dispositif de stockage de matériau fibreux situé à l'extérieur de la tête de pose de fibres (10) jusqu'au dispositif de mise en forme (16) intégré dans la tête de pose de fibres (10).

3. Tête de pose de fibres (10) selon la revendication 1 ou 2,
**caractérisée en ce que**
le dispositif de mise en forme (16) est réalisé pour mettre en forme en continu le matériau fibreux (5) plat, non mis en forme tridimensionnelle, en une forme profilée en U, en V, en T et/ou en oméga du profilé fibreux semi-fini (4).

4. Tête de pose de fibres (10) selon l'une des revendications précédentes,
**caractérisée en ce que**
le dispositif de mise en forme (16) comprend un ou plusieurs galets de mise en forme (19a, 19b, 30, 31a, 31b) ayant une surface de galet (20a, 20b) contre laquelle le matériau fibreux vient en appui pour le mettre en forme sous la forme profilée lorsqu'il est mis en forme en continu, les surfaces respectives (20a, 20b) des galets de mise en forme (19a, 19b, 30, 31a, 31b) correspondant en section transversale axiale à la forme profilée du profilé fibreux semi-fini (4) ou étant conformes à cette forme profilée, afin de mettre en forme le matériau fibreux plat (5) en la forme profilée tridimensionnelle.

5. Tête de pose de fibres (10) selon l'une des revendications précédentes, **caractérisée en ce que**
l'unité de pose (15) présente au moins un galet de pression, et
le galet de pression correspond, en section transversale axiale, à la forme profilée du profilé fibreux semi-fini (4) ou est conforme à cette forme profilée et/ou correspond à la forme profilée d'outil correspondant à la forme profilée du profilé fibreux semi-fini (4) ou est conforme à cette forme profilée d'outil.

6. Tête de pose de fibres (10) selon l'une des revendications précédentes,
**caractérisée en ce que**
ledit au moins un galet de pression de l'unité de pose (15) fait partie du dispositif de mise en forme (16), le galet de pression étant réalisé pour mettre en forme profilée tridimensionnelle le matériau fibreux (5) plat ou déjà partiellement mis en forme, en vue de constituer le profilé fibreux semi-fini (4), du fait que ledit au moins un galet de pression correspond, en section transversale axiale, à la forme profilée du profilé fibreux semi-fini (4) ou est conforme à cette forme profilée, afin de mettre en forme le matériau fibreux plat (5) en la forme profilée tridimensionnelle.

7. Tête de pose de fibres (10) selon l'une des revendications 5 ou 6,
**caractérisée en ce que**
l'unité de pose (15) comprend une pluralité de galets de pression, les galets de pression étant réalisés et disposés de telle sorte que chaque galet de pression est en contact avec au moins une portion de profilé et présente une section transversale axiale qui correspond à la forme profilée de la portion de profilé correspondante ou est conforme à la forme profilée de la portion de profilé.

8. Tête de pose de fibres (10) selon l'une des revendications précédentes,
**caractérisée en ce que**
un dispositif de coupe est prévu dans la tête de pose de fibres (10), lequel est réalisé pour couper le matériau fibreux (5) plat, partiellement mis en forme ou complètement mis en forme.

9. Tête de pose de fibres (10) selon l'une des revendications précédentes,
**caractérisée en ce que**
dans la tête de pose de fibres (10) est prévu un dispositif d'avance constitué par au moins deux galets qui constituent une paire de galets tournant en sens inverse, dispositif qui est réalisé pour faire avancer le matériau fibreux guidé par coopération de force entre les deux galets.

10. Installation de pose de fibres pour la pose de profilés fibreux semi-finis tridimensionnels (4), comportant une tête de pose de fibres (10) selon l'une des revendications précédentes et un outil (1), sur lequel le profilé fibreux semi-fini tridimensionnel (4) doit être posé par la tête de pose de fibres (10), l'outil (1) présentant une surface d'outil (2) qui correspond à la forme profilée du profilé fibreux semi-fini tridimensionnel (4), réalisé par la tête de pose de fibres (10), ou qui est conforme à cette forme profilée.

11. Installation de pose de fibres selon la revendication 10,
**caractérisée en ce que**
la surface (2) de l'outil (1) présente un ou plusieurs creux (3) et/ou bossages en forme de relief qui ont une forme de section transversale qui correspond à la forme profilée du profilé fibreux semi-fini (4) ou qui est conforme à cette forme profilée, l'installation de pose de fibres étant réalisée pour poser les profilés fibreux semi-finis (4) dans les creux (3) et/ou sur les bossages, de sorte que les profilés fibreux semi-finis (4) s'appuient par coopération de forme dans les creux (3) et/ou sur les bossages de la surface d'outil (2).

12. Installation de pose de fibres selon la revendication 10 ou 11,
**caractérisée en ce que**
l'installation de pose de fibres présente au moins un automate de déplacement (12) sur lequel la tête de pose de fibres (10) est disposée en tant qu'effecteur terminal, l'automate de déplacement (12) étant réalisé pour déplacer la tête de pose de fibres (10) par rapport à l'outil stationnaire (1).

13. Procédé de pose de profilés fibreux semi-finis tridimensionnels (4) pour la fabrication d'un composant composite à base de fibres,
dans lequel
le profilé fibreux semi-fini (4) est constitué d'un matériau fibreux en tant que partie d'un matériau composite de fibres, consistant à
- fournir une tête de pose de fibres (10) selon l'une des revendications 1 à 9,
- amener en continu le matériau fibreux (5) plat non mis en forme tridimensionnelle, mis à disposition par le dispositif de mise à disposition de matériau fibreux (13), jusqu'au dispositif de mise en forme (16) de la tête de pose de fibres (10),
- mettre en forme en continu le matériau fibreux plat non mis en forme tridimensionnelle (5) en une forme profilée tridimensionnelle pour constituer le profilé fibreux semi-fini (4) au moyen du dispositif de mise en forme (16) dans la tête de pose de fibres (10), et
- poser en continu le profilé fibreux semi-fini (4) réalisé par la tête de pose de fibres (10) sur une surface (2) d'un outil (1).
